(19) Europäisches Patentamt
European Patent Office
Office européen des brevets

(11) **EP 4 803 986 A1**

(12) **EUROPEAN PATENT APPLICATION**
published in accordance with Art. 153(4) EPC

(43) Date of publication:
**09.09.2026 Bulletin 2026/37**

(21) Application number: **24886395.3**

(22) Date of filing: **04.11.2024**

(51) International Patent Classification (IPC):
***G06F 3/041*** *(2006.01)* ***G06F 3/044*** *(2006.01)*

(52) Cooperative Patent Classification (CPC):
**G06F 3/041; G06F 3/044**

(86) International application number:
**PCT/KR2024/017149**

(87) International publication number:
**WO 2025/095725 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.11.2023 KR 20230150232**
**01.11.2024 KR 20240153676**

(71) Applicant: **LX Semicon Co., Ltd.**
**Daejeon 34027 (KR)**

(72) Inventors:
- **CHO, Sung Won**
  **Daejeon 34027 (KR)**
- **LEE, Deok Hyeong**
  **Daejeon 34027 (KR)**
- **LEE, Young Eun**
  **Daejeon 34027 (KR)**

(74) Representative: **Ter Meer Steinmeister & Partner Patentanwälte mbB**
**Nymphenburger Straße 4**
**80335 München (DE)**

(54) **TOUCH SENSING DEVICE AND TOUCH SENSING DEVICE DRIVING METHOD**

(57) A touch sensing device capable of generating hopping frequency-specific baselines, according to one aspect of the present disclosure, comprises: a baseline offset information storage unit in which baseline offset information is stored; a first baseline generation unit which generates a first baseline for generating touch sensing data in a normal frequency; and a second baseline generation unit which generates a second baseline for generating the touch sensing data in a hopping frequency, differing from the normal frequency, by using the first baseline and the baseline offset information.

FIG. 1

100
DCS/
DATA
135
120
GCS
DL
111
110
112
130
TSP
GL
140



Processed by Luminess, 75001 PARIS (FR)

## Description

[Technical Field]

The present disclosure relates to a touch sensing device, and more particularly, to a touch sensing device capable of detecting a touch on a display panel.

[Background Art]

As the information society develops, the demand for display devices to display images is increasing in various forms, and recently, various types of display devices such as liquid crystal display devices (LCDs) and organic light-emitting display devices (OLEDs) are being utilized.

Recently, instead of conventional input methods such as buttons, keyboards, and mice, display devices including a touch screen panel capable of detecting a touch input by a user's finger, a stylus pen, or the like have been widely used. Such a display device including a touch screen panel includes a touch sensing device for accurately detecting whether a touch is present and touch coordinates (touch location).

The touch sensing device drives touch electrodes disposed on the touch screen panel to acquire sensing values and generates touch sensing data such as whether a touch is present or a touch location using the sensing values. Specifically, the touch sensing device may generate touch sensing data based on a difference between touch raw data acquired for each touch sensing channel and a baseline.

Recently, in order to solve a problem in which the user's touch is not accurately recognized due to noise, a technology of changing the driving signal frequency or sensing signal frequency of a touch screen panel (frequency hopping) (hereinafter, referred to as "frequency hopping technology") has been proposed.

However, when the user's touch is detected by applying frequency hopping technology to the touch screen panel, there is a problem in that the user's touch cannot be accurately detected when a separate baseline is not provided for each hopping frequency.

In addition, even when it is possible to provide a separate baseline for each hopping frequency, since touch raw data needs to be collected over a plurality of frames to generate a baseline, a significant amount of time is inevitably required to generate a baseline for each hopping frequency, which may cause a problem in that a first touch generated by the user may not be detected.

Furthermore, when baselines are generated separately for each hopping frequency, there is a problem in that the size of a storage space for storing the baselines for each hopping frequency increases.

[Description of Invention]

[Technical Problem]

Therefore, the present disclosure is designed to solve the above problems and is for providing a touch sensing device and a method of driving a touch sensing device capable of generating a baseline for each hopping frequency.

The present disclosure is also for providing a touch sensing device and a method of driving a touch sensing device capable of reducing the time required to generate a baseline for each hopping frequency.

The present disclosure is also for providing a touch sensing device and a method of driving a touch sensing device capable of minimizing the size of a storage space for storing a baseline generated for each hopping frequency.

[Technical Solution]

A touch sensing device according to one aspect of the present disclosure for achieving the above-described technical problem includes: a baseline offset information storage unit in which baseline offset information is stored; a first baseline generation unit configured to generate a first baseline for generating touch sensing data at a normal frequency; and a second baseline generation unit configured to generate a second baseline for generating the touch sensing data at a hopping frequency different from the normal frequency using the first baseline and the baseline offset information.

A method of driving a touch sensing device according to another aspect of the present disclosure for achieving the above-described technical problem includes: generating a first baseline for generating touch sensing data at a normal frequency; reading baseline offset information of a hopping frequency different from the normal frequency from a baseline offset information storage unit; generating a second baseline for generating the touch sensing data at the hopping frequency using the first baseline and the baseline offset information; and generating the touch sensing data by comparing touch raw data obtained at the normal frequency with the first baseline or comparing touch raw data obtained at the hopping frequency with the second baseline.

[Advantageous Effects]

According to the present disclosure, since a baseline is generated for each hopping frequency before a touch sensing device operates in an active mode, a user's touch can be accurately detected even when the frequency of a touch driving signal or the frequency of a touch sensing signal varies.

In addition, according to the present disclosure, since a baseline of each hopping frequency can be obtained by applying baseline offset information acquired for each hopping frequency during the manufacture of a touch sensing device to a baseline of a normal frequency,

a time required to generate a baseline for each hopping frequency can be reduced, and accordingly, even a first touch generated by the user can be normally detected, thereby improving system reliability.

In addition, according to the present disclosure, since it is necessary to store only baseline offset information for each hopping frequency without storing the entire baseline for each hopping frequency, the size of a storage space for storing a baseline for each hopping frequency can be minimized.

[Description of Drawings]

FIG. 1 is a block diagram showing a display device including a touch sensing device according to one embodiment of the present disclosure.

FIG. 2 is a view schematically showing one example of the touch screen panel shown in FIG. 1.

FIG. 3 is a view schematically showing another example of the touch screen panel shown in FIG. 1.

FIG. 4 is a block diagram schematically showing the configuration of a baseline offset generation unit shown in FIG. 3.

FIG. 5 is a block diagram schematically showing the configuration of a baseline offset information generation unit according to a first embodiment of the present disclosure.

FIG. 6 is a block diagram schematically showing the configuration of a baseline offset information generation unit according to a second embodiment of the present disclosure.

FIG. 7a is a view showing one example of a first default baseline.

FIG. 7b is a view showing one example of a second default baseline.

FIG. 7c is a view showing one example of baseline offset information generated according to the first embodiment.

FIG. 7d is a view showing one example of baseline offset information generated according to the second embodiment.

FIG. 8a is a view showing one example of a first baseline at a normal frequency.

FIG. 8b is a view showing one example of a second baseline generated by applying the baseline offset information shown in FIG. 7c to the first baseline shown in FIG. 8a.

FIG. 8C is a view showing one example of a second baseline generated by applying the baseline offset information shown in FIG. 7d to the first baseline shown in FIG. 8a.

FIG. 9 is a flowchart showing a method of driving a touch sensing device according to one embodiment of the present disclosure.

[Mode for Invention]

The advantages and features of the present disclosure and methods of achieving them will become apparent with reference to the embodiments described below in detail in conjunction with the accompanying drawings. However, the present disclosure is not limited to the embodiments disclosed below and may be implemented in various different forms. These embodiments are provided only to make the disclosure of the present disclosure complete and to fully inform those of ordinary skill in the art of the scope of the disclosure, and the present disclosure is defined only by the scope of the claims.

Throughout the specification, the same components are substantially denoted by the same reference numerals. In the following description, detailed descriptions of components and functions known in the art and unrelated to the core components of the disclosure may be omitted.

When terms such as "comprise," "include," "have," and the like are used in the present specification, other parts may be added unless "only" is used. When a component is expressed in the singular, it is intended to include the plural unless explicitly stated otherwise.

In interpreting the components, even when there is no separate explicit description, the components are interpreted to include a margin of error.

The terms "first," "second," and the like are used to describe various components, but these components are not limited by these terms. These terms are used merely to distinguish one component from another. Accordingly, the first component described below may be the second component within the technical scope of the present disclosure.

The term "at least one" should be understood to include all combinations that can be presented from one or more related items. For example, the meaning of "at least one of the first item, the second item and the third item" may mean not only the first item, the second item or the third item individually, but also all combinations of items that can be presented from two or more of the first item, the second item and the third item.

The features of each of the various embodiments of the present disclosure may be entirely or partially combined with one another, and may be technically

operated in various ways, and each embodiment may be implemented independently of one another or together in an associated relationship.

Embodiments according to the present disclosure will be described in detail below with reference to the accompanying drawings. In the following description, when it is determined that a detailed description of a known function or configuration related to the present disclosure may unnecessarily obscure the essence of the present disclosure, such detailed description will be omitted.

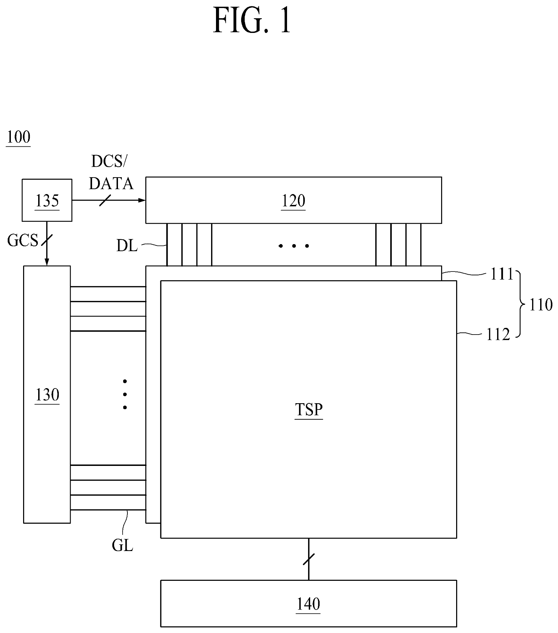

FIG. 1 is a block diagram showing a display device including a touch sensing device according to one embodiment of the present disclosure.

As shown in FIG. 1, a display device 100 including the touch sensing device according to one embodiment of the present disclosure includes a display panel 111, a touch screen panel 112, a data driving device 120, a gate driving device 130, a timing controller 135, and a touch sensing device 140.

In the display panel 111, a plurality of data lines DL connected to the data driving device 120 may be formed, and a plurality of gate lines GL connected to the gate driving device 130 may be formed. For example, the plurality of data lines DL may be disposed in a row or a column, and the plurality of gate lines GL may be disposed in a column or a row. In the following description, for convenience of description, it is assumed that the plurality of data lines DL are disposed in a row and the plurality of gate lines GL are disposed in a column.

In addition, in the display panel 111, a plurality of pixels may be defined at intersections of the plurality of data lines DL and the plurality of gate lines GL. Each of the pixels may include red (R), green (G), blue (B), and white (W) subpixels. In one embodiment, the subpixels may be repeatedly formed in a row direction or formed in a $2\times2$ matrix form. In this case, a color filter corresponding to each color is disposed in each of the red (R), green (G), and blue (B) subpixels, whereas a separate color filter is not disposed in the white (W) subpixel. In one embodiment, the red (R), green (G), blue (B), and white (W) subpixels may be formed to have the same area ratio, but the red (R), green (G), blue (B), and white (W) subpixels may also be formed to have different area ratios.

The display panel 111 according to the present embodiments may be a self-emissive display in which emitting devices provided in the display panel 111 emit light themselves without a separate light source such as a backlight unit, such as an organic light-emitting diode (OLED) display panel, a quantum dot display panel, and a micro light-emitting diode (LED) display panel.

A plurality of touch electrodes are formed on the touch screen panel 112 to sense a touch by a user, a stylus pen, or the like. The touch screen panel 112 may be disposed on a different layer, such as above or below the display panel 111, or implemented in a form embedded in the display panel 111. For example, the touch screen panel 112 may be disposed on the display panel 111 in an on-cell type or an in-cell type. The display panel 111 and the touch screen panel 112 may be collectively referred to as a panel 110.

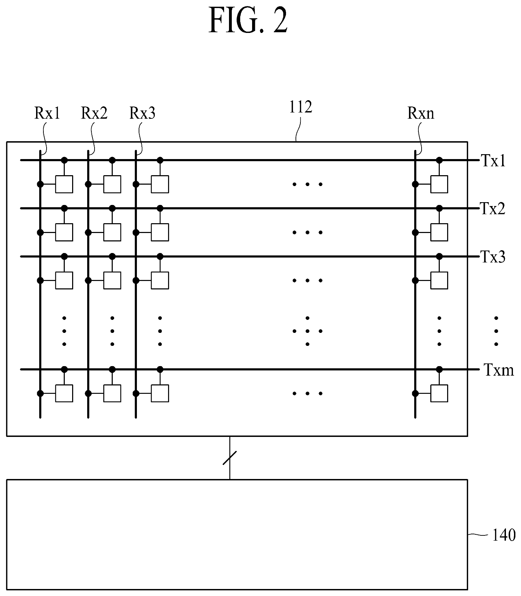

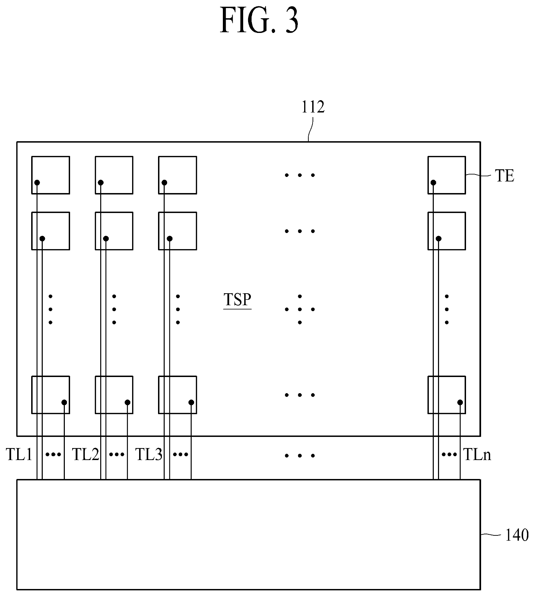

Hereinafter, a touch screen panel according to the present disclosure will be described in detail with reference to FIGS. 2 and 3.

FIG. 2 is a view schematically showing one example of the touch screen panel shown in FIG. 1.

As shown in FIG. 2, the touch screen panel 112 may include touch driving lines TX1 to TXm (where m is a natural number of 2 or more), a plurality of touch electrodes TE, and touch sensing lines RX1 to RXn (where n is a natural number of 2 or more). In one embodiment, the touch screen panel 112 may be implemented in a form embedded in the display device 100. For example, the touch screen panel 112 may be disposed in the display device 100 in an on-cell type.

The touch driving lines TX1 to TXm transmit a touch driving signal to each of the touch electrodes TE. Each of the touch electrodes TE may include a mutual capacitor. The touch sensing lines RX1 to RXn transmit voltages (or charges) of each of the touch electrodes TE to the touch sensing device 140.

The touch sensing lines RX1 to RXn may be sensing lines of the touch screen panel 112 and may also be referred to as touch sensing channels.

In FIG. 2, the touch screen panel 112 is shown as a mutual capacitance type touch screen panel including the touch driving lines TX1 to TXm and the touch sensing lines RX1 to RXn. However, the present disclosure is not limited thereto, and as shown in FIG. 3, may also be applied to a self-capacitance type touch screen panel in which the supply of a touch driving signal and the reception of capacitance generated by the user's touch or a stylus pen touch are implemented through a single touch line TL1 to TLn.

Hereinafter, for convenience of description, the touch screen panel 112 according to the present disclosure will be described on the assumption that the touch screen panel 112 is a mutual capacitance type touch screen panel 112.

Referring again to FIG. 1, the data driving device 120 may supply a data signal to the data lines DL to display image data DATA transmitted from the timing controller 135 on each pixel of the display panel 111.

The data driving device 120 may include at least one source driver integrated circuit (IC). The at least one source driver IC may include a shift register, a latch circuit, a digital-to-analog converter (DAC), an output buffer, etc. The at least one source driver IC may, in some cases, further include an analog-to-digital converter (ADC).

The at least one source driver IC may be connected to a bonding pad of the display panel 111 using a tape automated bonding (TAB) method or a chip-on-glass (COG) method, or may be directly formed on the display panel 111. In some cases, the at least one source driver IC may be integrally formed in the display panel

111. In addition, the at least one source driver IC may be implemented in a chip-on-film (COF) manner.

The gate driving device 130 sequentially drives the plurality of gate lines GL by sequentially supplying scan signals to the plurality of gate lines GL. The gate driving device 130 may include a shift register, a level shifter, etc.

The gate driving device 130 may be connected to a bonding pad of the display panel 110 using a TAB method, a COG method, or a chip-on-panel (COP) method, or may be implemented as a gate-in-panel (GIP) type and directly disposed on the display panel 111, and in some cases, may be integrally formed in the display panel 111. In addition, the gate driving device 130 may be implemented in a COF manner in which a plurality of gate driver ICs are implemented to be mounted on a gate circuit film connected to the display panel 111.

The gate driving device 130 sequentially supplies scan signals of an on voltage or an off voltage to the plurality of gate lines GL under control of the timing controller 135.

The timing controller 135 controls the data driving device 120 and the gate driving device 130. The timing controller 135 may control the data driving device 120 and the gate driving device 130 by supplying various control signals DCS and GCS required for the driving operations of the data driving device 120 and the gate driving device 130.

The timing controller 135 may start scanning according to the timing implemented in each frame, convert image data from the outside to match the data signal format used by the data driving device 120, output the converted image data DATA, and control data driving in accordance with the scan.

The timing controller 135 may receive various timing signals including a vertical synchronization signal Vsync, a horizontal synchronization signal Hsync, an input data enable (DE) signal, a clock signal CLK, and the like from the outside (for example, a host system), along with image data.

In addition to converting image data input from the outside into a data signal format used by the data driving device 120 and outputting the converted image data DATA, the timing controller 135 may receive timing signals such as the vertical synchronization signal Vsync, the horizontal synchronization signal Hsync, the input DE signal, and the clock signal to control the data driving device 120 and the gate driving device 130, generate various control signals, and output the control signals to the data driving device 120 and the gate driving device 130.

The timing controller 135 may be implemented as a separate component from the data driving device 120 or integrated with the data driving device 120 as an integrated circuit.

The touch sensing device 140 may perform a touch sensing function of sensing a touch generated by the user, a stylus pen, or the like on the touch screen panel 112. Specifically, the touch sensing device 140 may generate touch raw data TRD based on changes in capacitance obtained through the touch sensing lines RX1 to RXn and generate touch sensing data including whether a touch is present and touch coordinates based on the generated touch raw data.

Particularly, the touch sensing device 140 according to the present disclosure may generate touch sensing data while changing the frequency of the touch driving signal or the touch sensing signal. For example, the touch sensing device 140 may generate touch sensing data when a frequency of the touch driving signal or the touch sensing signal is a normal frequency, and when it is determined that noise has occurred, may generate touch sensing data by changing the frequency of the touch driving signal or the touch sensing signal to a hopping frequency. In one embodiment, the touch sensing device 140 may include a plurality of hopping frequencies and select one of the plurality of hopping frequencies according to noise.

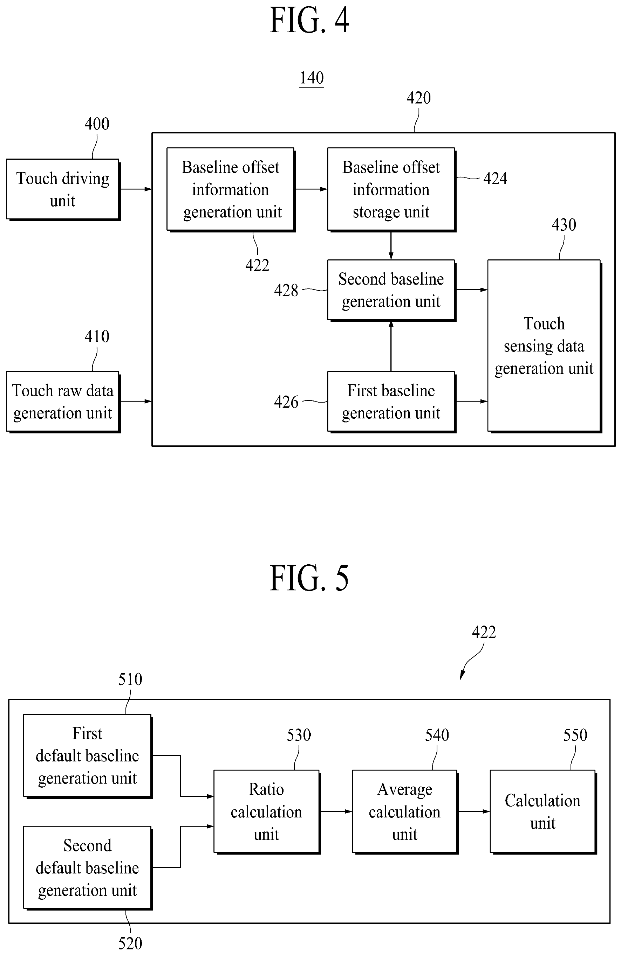

Hereinafter, the touch screen panel and the touch sensing device according to the present disclosure will be described in more detail with reference to FIGS. 4 to 6.

FIG. 4 is a view schematically showing the configuration of a touch sensing device according to one embodiment of the present disclosure.

As shown in FIG. 4, the touch sensing device 140 according to one embodiment of the present disclosure includes a touch driving unit 400, a touch raw data generation unit 410, and a touch controller 420. In one embodiment, the touch driving unit 400, the touch raw data generation unit 410, and the touch controller 420 may be integrated into a single read-out IC (ROIC).

The touch driving unit 400 may select a touch driving channel to output a touch driving signal and supply the touch driving signal to the touch driving lines TX1 to TXm connected to the selected touch driving channel. The touch driving unit 400 may select the touch driving channel to output a touch driving signal under the control of the touch controller 420. In one embodiment, the touch driving unit 400 may store information on a plurality of hopping frequencies in advance and change the frequency of the touch driving signal according to noise.

Specifically, the touch driving unit 400 may generate a touch driving signal according to the normal frequency and supply the generated touch driving signal to the touch driving lines TX1 to TXm, and when it is determined that noise has occurred, change the frequency of the touch driving signal to one of the hopping frequencies, generate a touch driving signal according to the changed hopping frequency, and transmit the generated touch driving signal to the touch driving lines TX1 to TXm.

The touch raw data generation unit 410 generates touch raw data using sensing values obtained through the touch sensing lines RX1 to RXn. The touch

raw data generation unit 410 may generate initial touch raw data using sensing values obtained through the touch sensing lines RX1 to RXn when there is no touch input by the user, a stylus pen, or the like and a touch driving signal at a normal frequency is supplied to the touch driving lines TX1 to TXm by a touch driving unit 422.

In addition, the touch raw data generation unit 410 may generate touch raw data using sensing values obtained through the touch sensing lines RX1 to RXn when a touch input by the user, a stylus pen, or the like occurs when the touch sensing device 140 is operating in an active mode. That is, the touch raw data generation unit 410 may generate touch raw data using sensing values obtained through the touch sensing lines RX1 to RXn when the touch driving signal at a normal frequency is supplied to the touch driving lines TX1 to TXm by the touch driving unit 422, or generate touch raw data using sensing values obtained through the touch sensing lines RX1 to RXn when the touch driving signal at each hopping frequency is supplied to the touch driving lines TX1 to TXm by the touch driving unit 422.

Specifically, the touch raw data generation unit 410 may receive the voltages of the touch electrodes TE through the touch sensing lines RX1 to RXn that receive the voltage of the touch electrodes TE under the control of the touch controller 420. The touch raw data generation unit 410 may sample the voltages of the touch electrodes TE received through the touch sensing lines RX1 to RXn and accumulate the sampled voltages in an integrator (not shown). The touch raw data generation unit 410 may input the voltage accumulated in the integrator to an ADC (not shown), convert the voltage into touch raw data as digital data, and output the touch raw data.

In one embodiment, the touch raw data generation unit 410 may obtain sensing values acquired by the plurality of touch sensing lines RX1 to RXn through differential sensing of adjacent touch sensing lines. For example, the touch raw data generation unit 410 may differentially sense a first touch sensing line RX1 and a second touch sensing line RX2 among the plurality of touch sensing lines RX1 to RXn. The touch raw data generation unit 410 according to one embodiment of the present disclosure senses a touch using a differential sensing method, thereby canceling out various noises (induced current and deviations thereof) generated during touch sensing and obtaining accurate touch sensing results.

The touch controller 420 may generate a touch driving setup signal to set the touch driving lines TX1 to TXm to which the touch driving signal is output from the touch driving unit 400 and a touch sensing setup signal to set the touch sensing lines RX1 to RXn through which the touch raw data generation unit 410 receives the touch sensing voltages.

In addition, the touch controller 420 according to the present disclosure may calculate a baseline to generate touch sensing data including whether a touch is present and touch coordinates based on the touch raw data.

Specifically, the touch controller 420 according to the present disclosure may generate a first baseline for generating touch sensing data for touch raw data generated when the touch driving unit 400 supplies a touch driving signal according to the normal frequency to the touch driving lines TX1 to TXm. In addition, the touch controller 420 may generate a second baseline for generating touch sensing data for touch raw data generated when the touch driving unit 400 changes the normal frequency to a hopping frequency and supplies a touch driving signal according to the hopping frequency to the touch driving lines TX1 to TXm.

In one embodiment, the touch controller 420 according to the present disclosure may generate the second baseline using the first baseline and predetermined baseline offset information. That is, the touch controller 420 according to the present disclosure may generate the second baseline by reflecting the baseline offset information in the first baseline according to the normal frequency, rather than generating the second baseline for the hopping frequency using touch raw data.

Accordingly, in the present disclosure, when the time required to generate the second baseline for the hopping frequency is reduced, an initial touch occurring after the touch sensing device 140 is turned on may be quickly recognized, thereby preventing first touch latency from occurring. In addition, in the present disclosure, the size of a storage space for storing the second baseline for the hopping frequency may also be minimized.

To this end, as shown in FIG. 4, the touch controller 420 may include the baseline offset information generation unit 422, a baseline offset information storage unit 424, a first baseline generation unit 426, a second baseline generation unit 428, and a touch sensing data generation unit 430.

The baseline offset information generation unit 422 may generate baseline offset information for generating a second baseline. Specifically, the baseline offset information generation unit 422 may generate baseline offset information for each hopping frequency using a ratio of a first default baseline obtained at a normal frequency and a second default baseline obtained at each hopping frequency during the manufacture of the touch sensing device 140.

In a first embodiment, when the first default baseline and the second default baseline are generated in a matrix form of $M \times N$ (where M and N are natural numbers of 2 or more), the baseline offset information generation unit 422 may generate baseline offset information in a matrix form of $1 \times N$.

According to this embodiment, the baseline offset information generation unit 422 may generate baseline offset information using an average value, for each column, of ratio values between a first default reference value corresponding to an $i^{th}$ row and a $j^{th}$ column of the first default baseline and a second default reference value corresponding to an $i^{th}$ row and a $j^{th}$ column of

the second default baseline.

Hereinafter, the configuration of the baseline offset information generation unit 422 according to the first embodiment of the present disclosure will be described in more detail with reference to FIG. 5.

FIG. 5 is a block diagram schematically showing the configuration of the baseline offset information generation unit according to the first embodiment of the present disclosure. As shown in FIG. 5, the baseline offset information generation unit 422 according to one embodiment of the present disclosure may include a first default baseline generation unit 510, a second default baseline generation unit 520, a ratio calculation unit 530, an average calculation unit 540, and a calculation unit 550.

The first default baseline generation unit 510 may generate a first default baseline using first default touch raw data obtained by supplying a touch driving signal at a normal frequency to the touch driving lines TX1 to TXm during the manufacture of the touch sensing device 140. In one embodiment, the first default baseline generation unit 510 may generate the first default baseline using an average value of the first default touch raw data generated during n frames (where n is a natural number of 2 or more).

The second default baseline generation unit 520 may generate a second default baseline using the second default touch raw data obtained by supplying a touch driving signal for each hopping frequency to the touch driving lines TX1 to TXm during the manufacture of the touch sensing device 140. That is, the second default baseline may be generated for each hopping frequency.

In one embodiment, the second default baseline generation unit 520 may generate the second default baseline using an average value of second default touch raw data generated during n frames (where n is a natural number of 2 or more).

The ratio calculation unit 550 may calculate ratio values between a first default reference value at an $i^{th}$ row and a $j^{th}$ column of the first default baseline and a second default reference value at an $i^{th}$ row and a $j^{th}$ column of the second default baseline.

The average calculation unit 540 may calculate an average value of the ratio values for each column by averaging the ratio values calculated by the ratio calculation unit 550 for each column.

The calculation unit 550 may calculate offset values using the average values of the ratio values for each column calculated by the average calculation unit 540 and generate baseline offset information using the calculated offset values. In one embodiment, the calculation unit 550 may generate offset values included in the baseline offset information using the following Mathematical Formula 1.

[Mathematical Formula 1]

$$OV_{1j} = 1 - \left(1 - \frac{1}{M}\sum_{i=1}^{M}\frac{DRV1_{ij}}{DRV2_{ij}}\right)$$

In Mathematical Formula 1, $OV_{1j}$ represents an offset value at a $j^{th}$ column of a first row in the baseline offset information, $DRV1_{ij}$ represents a first default reference value at an $i^{th}$ row and a $j^{th}$ column of the first default baseline, $DRV2_{ij}$ represents a second default reference value at an $i^{th}$ row and a $j^{th}$ column of the second default baseline, and M represents the number of rows of the first and second default reference baselines.

As described above, according to the first embodiment, even when the first default baseline and the second default baseline are configured in an M×N matrix form, since the baseline offset information generation unit 422 generates baseline offset information in a 1×N matrix form, the size of the baseline offset information storage unit 424 in which the baseline offset information is stored may be minimized.

In the first embodiment, the baseline offset information generation unit 422 has been described as generating baseline offset information in a 1×N matrix form when the first default baseline and the second default baseline are configured in an M×N matrix form. However, in a second embodiment, when the first default baseline and the second default baseline are configured in an M×N matrix form, the baseline offset information generation unit 422 may also generate baseline offset information in an M×N matrix form.

According to this embodiment, the baseline offset information generation unit 422 may generate baseline offset information using a ratio value between a first default reference value corresponding to an $i^{th}$ row and a $j^{th}$ column of the first default baseline and a second default reference value corresponding to an $i^{th}$ row and a $j^{th}$ column of the second default baseline.

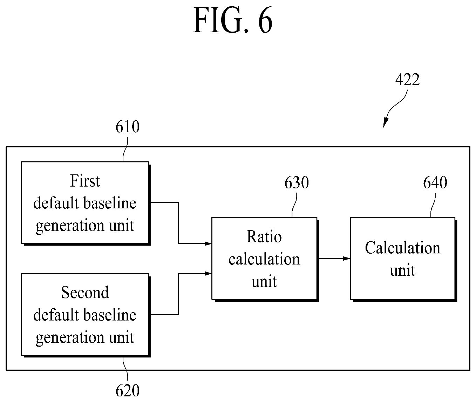

Hereinafter, the configuration of the baseline offset information generation unit 422 according to the second embodiment of the present disclosure will be described in more detail with reference to FIG. 6.

FIG. 6 is a block diagram schematically showing the configuration of the baseline offset information generation unit according to the second embodiment of the present disclosure. As shown in FIG. 6, the baseline offset information generation unit 422 according to one embodiment of the present disclosure includes a first default baseline generation unit 610, a second default baseline generation unit 620, a ratio calculation unit 630, and a calculation unit 640.

Since the features of the first default baseline generation unit 610, the second default baseline generation unit 620, and the ratio calculation unit 630 are the same as the features of the first default baseline generation unit 510, the second default baseline generation unit 520, and the ratio calculation unit 530 shown in FIG. 5, a

detailed description thereof will be omitted.

The calculation unit 640 may calculate offset values using the ratio values calculated by the ratio calculation unit 630 and generate baseline offset information using the calculated offset values. In one embodiment, the calculation unit 640 may generate offset values included in the baseline offset information using the following Mathematical Formula 2.

[Mathematical Formula 2]

$$OV_{ij} = 1 - \left(1 + \frac{DRV1_{ij}}{DRV2_{ij}}\right)$$

In Mathematical Formula 2, $OV_{ij}$ represents an offset value at an $i^{th}$ row and a $j^{th}$ column of the baseline offset information, $DRV1_{ij}$ represents a first default reference value at an $i^{th}$ row and a $j^{th}$ column of the first default baseline, and $DRV2_{ij}$ represents a second default reference value at an $i^{th}$ row and a $j^{th}$ column of the second default baseline.

As described above, according to the second embodiment, since the baseline offset information generation unit 422 may configure the baseline offset information in an M×N matrix form like the first default baseline and the second default baseline, the accuracy of the offset values stored in the baseline offset information may be improved.

Referring again to FIG. 4, the baseline offset information storage unit 424 may store the baseline offset information generated by the baseline offset information generation unit 422. Particularly, when there are a plurality of hopping frequencies, the baseline offset information storage unit 424 may store baseline offset information for each hopping frequency.

The first baseline generation unit 426 may generate a first baseline at a normal frequency using the initial touch raw data generated by the touch raw data generation unit 410 when the touch driving unit 400 supplies a touch driving signal according to the normal frequency to the touch driving lines TX1 to TXm after the touch sensing device 140 is turned on. That is, the first baseline generation unit 426 may generate a first baseline using initial touch raw data generated when there is no touch input from the outside, such as from the user, a stylus pen, or the like.

In one embodiment, the first baseline generation unit 426 may generate the first baseline by averaging touch raw data generated during n frames (where n is a natural number of 2 or more).

The second baseline generation unit 426 may generate a second baseline for each hopping frequency using the first baseline generated by the first baseline generation unit 424 and baseline offset information for each hopping frequency stored in the baseline offset information storage unit 424.

In one embodiment, when baseline offset information generated according to Mathematical Formula 1 is stored in the baseline offset information storage unit 424, the second baseline generation unit 426 may generate a second baseline by generating second reference values to be included in the second baseline according to the following Mathematical Formula 3.

[Mathematical Formula 3]

$$RV2_{ij} = RV1_{ij} \times OV_{1j}$$

In Mathematical Formula 3, $RV2_{ij}$ represents a second reference value corresponding to an $i^{th}$ row and a $j^{th}$ column of the second baseline, $RV1_{ij}$ represents a first reference value corresponding to an $i^{th}$ row and a $j^{th}$ column of the first baseline, and $OV_{1j}$ represents an offset value at a $j^{th}$ column of a first row in the baseline offset information.

In another embodiment, when baseline offset information generated according to the above-described Mathematical Formula 2 is stored in the baseline offset information storage unit 424, the second baseline generation unit 426 may generate a second baseline by generating second reference values to be included in the second baseline according to the following Mathematical Formula 4.

[Mathematical Formula 4]

$$RV2_{ij} = RV1_{ij} \times OV_{ij}$$

In Mathematical Formula 4, $RV2_{ij}$ represents a second reference value corresponding to an $i^{th}$ row and a $j^{th}$ column of the second baseline, $RV1_{ij}$ represents a first reference value corresponding to an $i^{th}$ row and a $j^{th}$ column of the first baseline, and $OV_{ij}$ represents an offset value corresponding to an $i^{th}$ row and a $j^{th}$ column of the baseline offset information.

The touch sensing data generation unit 430 may generate touch sensing data including whether a touch is present or touch coordinates based on the touch raw data and transmit the generated touch sensing data to a host system (not shown).

Specifically, when the touch sensing device 140 operates in an active mode, the touch sensing data generation unit 430 may generate touch sensing data using the touch raw data generated by the touch raw data generation unit 410 and the first baseline generated by the first baseline generation unit 426 when the touch driving unit 400 supplies a touch driving signal according to the normal frequency to the touch driving lines TX1 to TXm.

In addition, when the touch sensing device 140 operates in an active mode, the touch sensing data generation unit 430 may generate touch sensing data

using the touch raw data generated by the touch raw data generation unit 410 and the second baseline generated by the second baseline generation unit 428 when the touch driving unit 400 supplies a touch driving signal according to the hopping frequency to the touch driving lines TX1 to TXm.

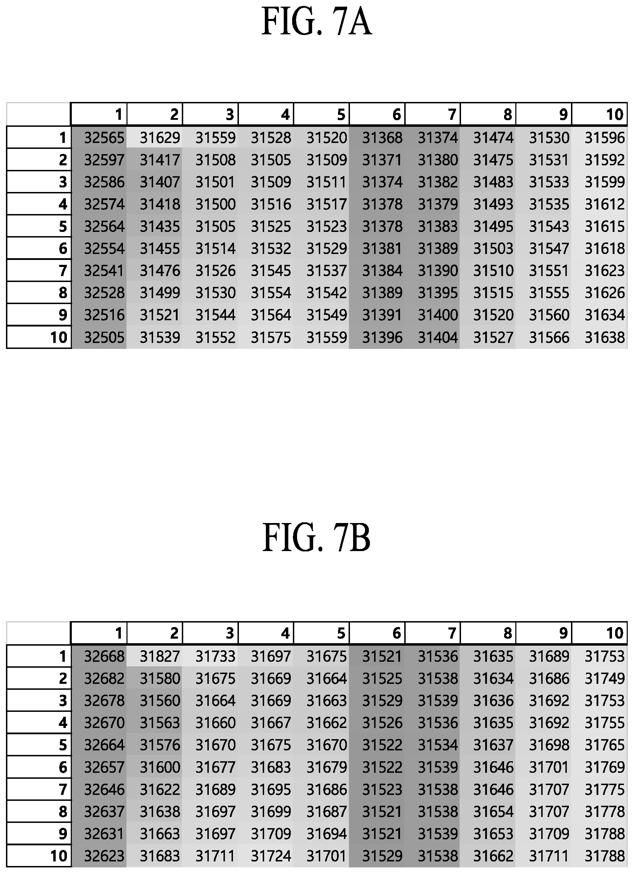

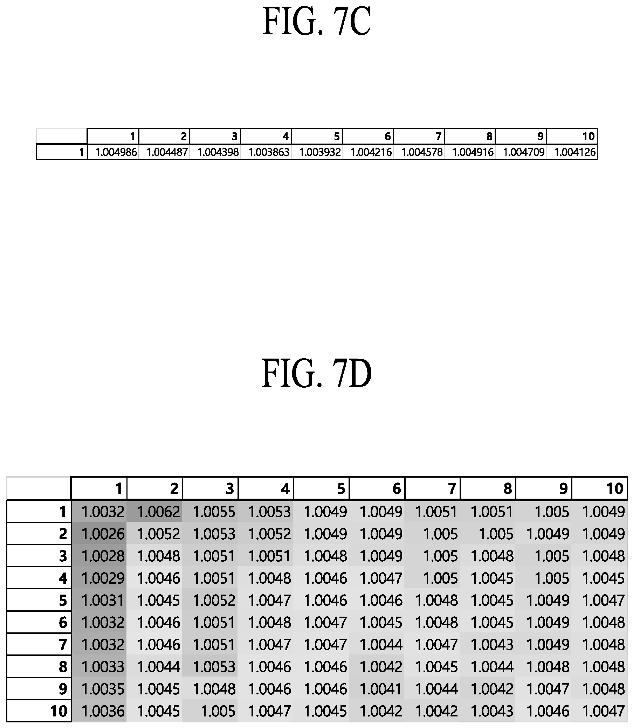

FIG. 7a is a view showing an example of the first default baseline, and FIG. 7b is a view showing an example of the second default baseline. In this case, the baseline offset information generation unit 422 according to the first embodiment may generate baseline offset information having offset values as shown in FIG. 7c by substituting the first default reference values of the first default baseline shown in FIG. 7a and the second default reference values of the second default baseline shown in FIG. 7b into the above-described Mathematical Formula 1.

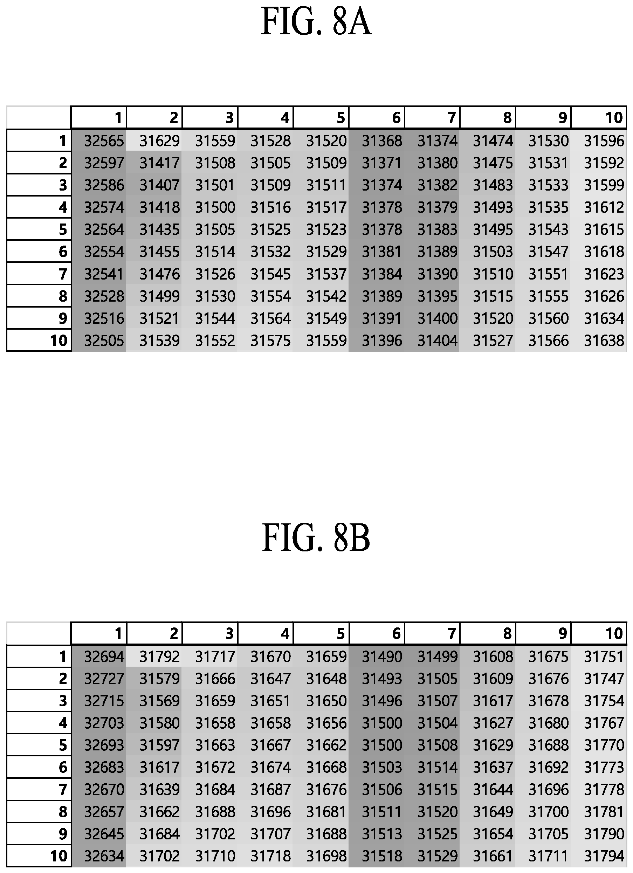

According to this example, when the first baseline at a normal frequency generated by the first baseline generation unit 426 is as shown in FIG. 8a, the second baseline generation unit 428 may generate a second baseline having second reference values as shown in FIG. 8b by substituting the first reference values of the first baseline shown in FIG. 8a and the offset values shown in FIG. 7c into Mathematical Formula 3.

Meanwhile, the baseline offset information generation unit 422 according to the second embodiment may generate baseline offset information having offset values as shown in FIG. 7d by substituting the first default reference values of the first default baseline shown in FIG. 7a and the second default reference values of the second default baseline shown in FIG. 7b into the above-described Mathematical Formula 2.

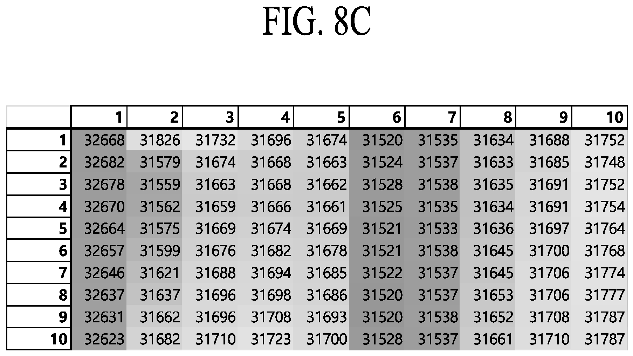

According to this example, when the first baseline at a normal frequency generated by the first baseline generation unit 426 is as shown in FIG. 8a, the second baseline generation unit 428 may generate a second baseline having second reference values as shown in FIG. 8c by substituting the first reference values of the first baseline shown in FIG. 8a and the offset values shown in FIG. 7d into Mathematical Formula 4.

In the above-described embodiments, the baseline offset information generation unit 422 has been described as being included in the touch sensing device 140. However, in another embodiment, the baseline offset information generation unit 422 may be implemented as a separate configuration from the touch sensing device 140. For example, the baseline offset information generation unit 422 may be implemented as a separate PC or the like separated from the display device 100, generate baseline offset information through the first default baseline and the second default baseline during the manufacture of the touch sensing device 140, and store the generated baseline offset information in the baseline offset information storage unit 424.

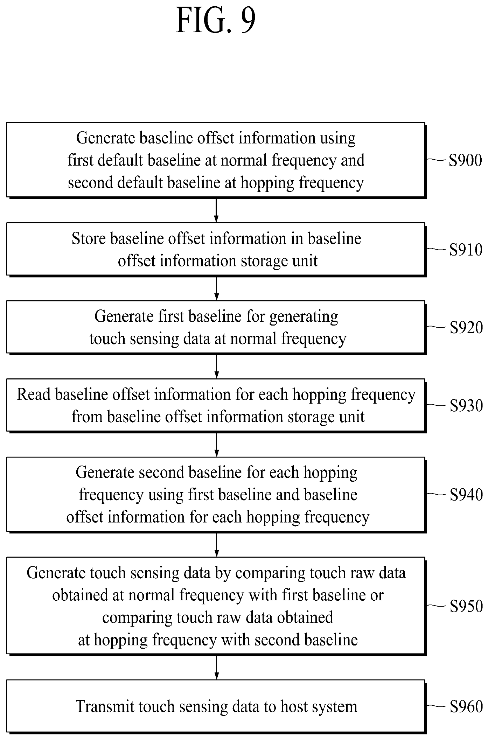

Hereinafter, a method of driving a touch sensing device according to one embodiment of the present disclosure will be described with reference to FIG. 9.

FIG. 9 is a flowchart showing the method of driving a touch sensing device according to one embodiment of the present disclosure. The method of driving a touch sensing device shown in FIG. 9 may be applied to the touch sensing device shown in FIGS. 1 to 6.

First, as shown in FIG. 9, the touch sensing device 140 generates baseline offset information (S900). The touch sensing device 140 may generate baseline offset information for each hopping frequency using a first default baseline obtained at a normal frequency and a second default baseline obtained at each hopping frequency during the manufacture of the touch sensing device 140. In this case, the baseline offset information may be used to generate a baseline (second baseline) for generating touch sensing data when the touch sensing device 140 operates at a hopping frequency different from the normal frequency due to noise or the like.

Specifically, the touch sensing device 140 may generate baseline offset information for each hopping frequency using a ratio of a first default baseline obtained at a normal frequency and a second default baseline obtained at each hopping frequency during the manufacture of the touch sensing device 140.

In this case, the first default baseline may be generated using first default touch raw data obtained by supplying a touch driving signal at a normal frequency to the touch driving lines TX1 to TXm during the manufacture of the touch sensing device 140, and the second default baseline may be generated using second default touch raw data obtained by supplying a touch driving signal for each hopping frequency to the touch driving lines TX1 to TXm during the manufacture of the touch sensing device 140. That is, the second default baseline may be generated for each hopping frequency.

In the above-described embodiment, the first default baseline may be generated using an average value of first default touch raw data generated during n frames (where n is a natural number of 2 or more), and the second default baseline may be generated using an average value of second default touch raw data generated during n frames.

In the first embodiment, when the first default baseline and the second default baseline are generated in an M×N matrix form (where M and N are natural numbers of 2 or more), the touch sensing device 140 may generate baseline offset information in a 1×N matrix form. According to this embodiment, the touch sensing device 140 may generate baseline offset information using an average value, for each column, of ratio values between the first default reference value corresponding to an ith row and a jth column of the first default baseline and the second default reference value corresponding to an ith row and a jth column of the second default baseline.

More specifically, the touch sensing device 140 may calculate offset values included in the baseline offset information using the above-described Mathematical Formula 1 and may generate the baseline offset informa-

tion using the calculated offset values. Since a method in which the touch sensing device 140 generates the baseline offset information using Mathematical Formula 1 has been described with reference to FIG. 5, a detailed description thereof will be omitted.

According to the above-described first embodiment, even when the first default baseline and the second default baseline are configured in an M×N matrix form, the touch sensing device 140 may generate baseline offset information in a 1×N matrix form, thereby minimizing the size of a storage space in which the baseline offset information is stored.

In the first embodiment, the touch sensing device 140 has been described as generating baseline offset information in a 1×N matrix form when the first default baseline and the second default baseline are configured in an M×N matrix form. However, in the second embodiment, when the first default baseline and the second default baseline are configured in an M×N matrix form, the touch sensing device 140 may also generate baseline offset information in an M×N matrix form.

According to the second embodiment, the touch sensing device 140 may generate baseline offset information using a ratio value between the first default reference value corresponding to an $i^{th}$ row and a $j^{th}$ column of the first default baseline and the second default reference value corresponding to an $i^{th}$ row and a $j^{th}$ column of the second default baseline.

More specifically, the touch sensing device 140 may calculate offset values included in the baseline offset information using the above-described Mathematical Formula 2 and generate the baseline offset information using the calculated offset values. Since a method in which the touch sensing device 140 generates the baseline offset information using Mathematical Formula 2 has been described with reference to FIG. 6, a detailed description thereof will be omitted.

According to the above-described second embodiment, since the touch sensing device 140 configures the baseline offset information in an M×N matrix form like the first default baseline and the second default baseline, the accuracy of offset values stored in the baseline offset information may be improved.

Subsequently, the touch sensing device 140 may store the baseline offset information generated in S900 in the baseline offset information storage unit (S910).

Subsequently, when the display device 100 is turned on, the touch sensing device 140 may generate a first baseline for generating touch sensing data at a normal frequency (S920). Specifically, as the display device 100 is turned on, the touch sensing device 140 may be turned on and generate a first baseline at a normal frequency using the initial touch raw data generated by supplying a touch driving signal according to the normal frequency to the touch driving lines TX1 to TXm. That is, the first baseline generation unit 426 may generate a first baseline using initial touch raw data generated when there is no touch input from the outside, such as from the user or a stylus pen.

In one embodiment, the touch sensing device 140 may generate a first baseline by averaging touch raw data generated during n frames (where n is a natural number of 2 or more).

Subsequently, the touch sensing device 140 may read baseline offset information for each hopping frequency from the baseline offset information storage unit (S930).

Subsequently, the touch sensing device 140 may generate a second baseline for each hopping frequency using the first baseline generated in S920 and baseline offset information for each hopping frequency read in S930 (S940).

In one embodiment, when the touch sensing device 140 reads the baseline offset information generated according to the above-described Mathematical Formula 1 from the baseline offset information storage unit, the touch sensing device 140 may generate the second baseline by generating second reference values to be included in the second baseline according to the above-described Mathematical Formula 3.

In another embodiment, when the touch sensing device 140 reads the baseline offset information generated according to the above-described Mathematical Formula 2 from the baseline offset information storage unit, the touch sensing device 140 may generate the second baseline by generating second reference values to be included in the second baseline according to the above-described Mathematical Formula 4.

Subsequently, the touch sensing device 140 may generate touch sensing data by comparing the touch raw data obtained at a normal frequency with the first baseline or comparing the touch the raw data obtained at a hopping frequency with the second baseline (S950).

Specifically, the touch sensing device 140 may generate touch sensing data using the first baseline and the touch raw data generated when the touch sensing device 140 supplies a touch driving signal according to a normal frequency to the touch driving lines TX1 to TXm in an active mode.

In addition, the touch sensing device 140 may generate touch sensing data using the second baseline and the touch raw data generated when the touch sensing device 140 supplies a touch driving signal according to a hopping frequency to the touch driving lines TX1 to TXm in an active mode.

The touch sensing device 140 transmits the generated touch sensing data to the host system (S860).

A person skilled in the art to which the present disclosure pertains will understand that the above-described disclosure may be implemented in other specific forms without changing the technical concept or essential features thereof.

Therefore, the embodiments described above should be understood as illustrative in all respects and

not limiting. The scope of the disclosure is defined by the claims set forth below rather than by the detailed description above, and all modifications or variations derived from the meaning and scope of the claims and equivalent concepts should be interpreted as being included within the scope of the disclosure.

## Claims

1. A touch sensing device comprising: a baseline offset information storage unit in which baseline offset information is stored; a first baseline generation unit configured to generate a first baseline for generating touch sensing data at a normal frequency; and a second baseline generation unit configured to generate a second baseline for generating the touch sensing data at a hopping frequency different from the normal frequency using the first baseline and the baseline offset information.

2. The touch sensing device of claim 1, further comprising a baseline offset information generation unit configured to generate the baseline offset information using a ratio of a first default baseline obtained at the normal frequency and a second default baseline obtained at the hopping frequency during manufacture of the touch sensing device.

3. The touch sensing device of claim 2, wherein the baseline offset information generation unit generates the baseline offset information using a ratio of a first default reference value at an $i^{th}$ row and a $j^{th}$ column of the first default baseline and a second default reference value at an $i^{th}$ row and a $j^{th}$ column of the second default baseline.

4. The touch sensing device of claim 2, wherein the first default baseline and the second default baseline are configured in an $M \times N$ matrix form (where M and N are natural numbers of 2 or more),the baseline offset information is configured in a $1 \times N$ matrix form, andthe second baseline generation unit generates second reference values of the second baseline using Mathematical Formula $RV2_{ij} = RV1_{ij} \times OV_{ij}$, wherein, in the Mathematical Formula, $RV2_{ij}$ represents a second reference value at an $i^{th}$ row and a $j^{th}$ column of the second baseline, RV1ij represents a second reference value at an $i^{th}$ row and a $j^{th}$ column of the first baseline, and $OV_{1j}$ represents an offset value at a $j^{th}$ column of the baseline offset information.

5. The touch sensing device of claim 2, wherein the baseline offset information generation unit calculates offset values included in the baseline offset information using Mathematical Formula $OV_{1j} = 1 - (1 + \frac{1}{M}\sum_{i=1}^{M}\frac{DRV1_{ij}}{DRV2_{ij}})$ , wherein, in the Mathematical Formula, $OV_{1j}$ represents an offset value at a $j^{th}$ column of the baseline offset information, $DRV1_{ij}$ represents a first default reference value at an $i^{th}$ row and a $j^{th}$ column of the first default baseline, and $DRV2_{ij}$ represents a second default reference value at an $i^{th}$ row and a $j^{th}$ column of the second default baseline.

6. The touch sensing device of claim 2, wherein the first default baseline, the second default baseline, and the baseline offset information are configured in an $M \times N$ matrix form (where M and N are natural numbers of 2 or more), and the second baseline generation unit generates second reference values of the second baseline using Mathematical Formula $RV2_{ij} = RV1_{ij} \times OV_{ij}$, wherein, in the Mathematical Formula, $RV2_{ij}$ represents a second reference value at an $i^{th}$ row and a $j^{th}$ column of the second baseline, $RV1_{ij}$ represents a first reference value at an $i^{th}$ row and a $j^{th}$ column of the first baseline, and $OV_{ij}$ represents an offset value at an $i^{th}$ row and a $j^{th}$ column of the baseline offset information.

7. The touch sensing device of claim 6, wherein the baseline offset information generation unit calculates offset values included in the baseline offset information using Mathematical Formula

$$OV_{ij} = 1 - (1 + \frac{DRV1_{ij}}{DRV2_{ij}})$$

, wherein, in the Mathematical Formula, $OV_{ij}$ represents an offset value at an $i^{th}$ row and a $j^{th}$ column of the offset information, $DRV1_{ij}$ represents a first default reference value at an $i^{th}$ row and a $j^{th}$ column of the first default baseline, and $DRV2_{ij}$ represents a second default reference value at an $i^{th}$ row and a $j^{th}$ column of the second default baseline.

8. The touch sensing device of claim 1, wherein the hopping frequency is provided as a plurality of hopping frequencies, and the baseline offset information generation unit generates the baseline offset information for each hopping frequency and stores the generated baseline offset information in the baseline offset information storage unit.

9. The touch sensing device of claim 1, further comprising:a touch driving unit configured to supply a touch driving signal to a touch electrode of a touch screen panel according to the normal frequency or the hopping frequency;a touch raw data generation unit configured to generate touch raw data by sensing a change in capacitance generated at the touch electrode according to the touch driving signal; and a touch sensing data generation unit configured to generate the touch sensing data by comparing the

touch raw data with the first baseline or the second baseline.

**10.** A method of driving a touch sensing device, comprising: generating a first baseline for generating touch sensing data at a normal frequency; reading baseline offset information of a hopping frequency different from the normal frequency from a baseline offset information storage unit; generating a second baseline for generating the touch sensing data at the hopping frequency using the first baseline and the baseline offset information; and generating the touch sensing data by comparing touch raw data obtained at the normal frequency with the first baseline or comparing touch raw data obtained at the hopping frequency with the second baseline.

**11.** The method of claim 10, wherein the baseline offset information is generated using a ratio of a first default reference value at an $i^{th}$ row and a $j^{th}$ column of a first default baseline obtained at the normal frequency and a second default reference value at an $i^{th}$ row and a $j^{th}$ column of a second default baseline obtained at the hopping frequency during manufacture of the touch sensing device.

**12.** The method of claim 11, wherein the first default baseline and the second default baseline are configured in an M×N matrix form (where M and N are natural numbers of 2 or more),the baseline offset information is configured in a 1×N matrix form, andthe second baseline includes second reference values generated using Mathematical Formula $RV2_{ij} = RV1_{ij} \times OV_{1j}$, wherein, in the Mathematical Formula, $RV2_{ij}$ represents a second reference value at an $i^{th}$ row and a $j^{th}$ column of the second baseline, $RV1_{ij}$ represents a second reference value at an $i^{th}$ row and a $j^{th}$ column of the first baseline, and $OV_{1j}$ represents an offset value at a $j^{th}$ column of the baseline offset information.

**13.** The method of claim 11, wherein offset values included in the baseline offset information are calculated using Mathematical Formula

$$OV_{1j} = 1 - \left(1 + \frac{1}{M}\sum_{i=1}^{M}\frac{DRV1_{ij}}{DRV2_{ij}}\right)$$

, wherein, in the Mathematical Formula, $OV_{1j}$ represents an offset value at a $j^{th}$ column of the baseline offset information, $DRV1_{ij}$ represents a first default reference value at an $i^{th}$ row and a $j^{th}$ column of the first default baseline, and $DRV2_{ij}$ represents a second default reference value at an $i^{th}$ row and a $j^{th}$ column of the second default baseline.

**14.** The method of claim 11, wherein the first default baseline, the second default baseline, and the baseline offset information are configured in an M×N matrix form (where M and N are natural numbers of 2 or more), and the second baseline includes second reference values generated using Mathematical Formula $RV2_{ij} = RV1_{ij} \times OV_{ij}$ , wherein in the Mathematical Formula, $RV2_{ij}$ represents a second reference value at an $i^{th}$ row and a $j^{th}$ column of the second baseline, $RV1_{ij}$ represents a first reference value at an $i^{th}$ row and a $j^{th}$ column of the first baseline, and $OV_{ij}$ represents an offset value at an $i^{th}$ row and a $j^{th}$ column of the baseline offset information.

**15.** The method of claim 11, wherein offset the baseline offset information are calculated using Mathematical Formula

$$OV_{ij} = 1 - \left(1 + \frac{DRV1_{ij}}{DRV2_{ij}}\right)$$

, wherein, in the Mathematical Formula, $OV_{ij}$ represents an offset value at an $i^{th}$ row and a $j^{th}$ column of the offset information, $DRV1_{ij}$ represents a first default reference value at an $i^{th}$ row and a $j^{th}$ column of the first default baseline, and $DRV2_{ij}$ represents a second default reference value at an $i^{th}$ row and a $j^{th}$ column of the second default baseline.

# FIG. 1

100
DCS/
DATA
135
120
GCS
DL
111
110
112
130
TSP
GL
140

FIG. 2

Rx1
Rx2
Rx3
112
Rxn
Tx1
Tx2
Tx3
Txm
140

# FIG. 3

112
TE
TSP
TL1
TL2
TL3
TLn
140

# FIG. 4

140
420
400
Touch driving unit
Baseline offset information generation unit
Baseline offset information storage unit
424
430
422
428
Second baseline generation unit
Touch sensing data generation unit
410
Touch raw data generation unit
426
First baseline generation unit

# FIG. 5

422
510
First default baseline generation unit
530
540
550
Ratio calculation unit
Average calculation unit
Calculation unit
Second default baseline generation unit
520

FIG. 6

422
610
First default baseline generation unit
630
640
Ratio calculation unit
Calculation unit
Second default baseline generation unit
620

# FIG. 7A

| | 1 | 2 | 3 | 4 | 5 | 6 | 7 | 8 | 9 | 10 |
|---|---|---|---|---|---|---|---|---|---|---|
| 1 | 32565 | 31629 | 31559 | 31528 | 31520 | 31368 | 31374 | 31474 | 31530 | 31596 |
| 2 | 32597 | 31417 | 31508 | 31505 | 31509 | 31371 | 31380 | 31475 | 31531 | 31592 |
| 3 | 32586 | 31407 | 31501 | 31509 | 31511 | 31374 | 31382 | 31483 | 31533 | 31599 |
| 4 | 32574 | 31418 | 31500 | 31516 | 31517 | 31378 | 31379 | 31493 | 31535 | 31612 |
| 5 | 32564 | 31435 | 31505 | 31525 | 31523 | 31378 | 31383 | 31495 | 31543 | 31615 |
| 6 | 32554 | 31455 | 31514 | 31532 | 31529 | 31381 | 31389 | 31503 | 31547 | 31618 |
| 7 | 32541 | 31476 | 31526 | 31545 | 31537 | 31384 | 31390 | 31510 | 31551 | 31623 |
| 8 | 32528 | 31499 | 31530 | 31554 | 31542 | 31389 | 31395 | 31515 | 31555 | 31626 |
| 9 | 32516 | 31521 | 31544 | 31564 | 31549 | 31391 | 31400 | 31520 | 31560 | 31634 |
| 10 | 32505 | 31539 | 31552 | 31575 | 31559 | 31396 | 31404 | 31527 | 31566 | 31638 |

# FIG. 7B

| | 1 | 2 | 3 | 4 | 5 | 6 | 7 | 8 | 9 | 10 |
|---|---|---|---|---|---|---|---|---|---|---|
| 1 | 32668 | 31827 | 31733 | 31697 | 31675 | 31521 | 31536 | 31635 | 31689 | 31753 |
| 2 | 32682 | 31580 | 31675 | 31669 | 31664 | 31525 | 31538 | 31634 | 31686 | 31749 |
| 3 | 32678 | 31560 | 31664 | 31669 | 31663 | 31529 | 31539 | 31636 | 31692 | 31753 |
| 4 | 32670 | 31563 | 31660 | 31667 | 31662 | 31526 | 31536 | 31635 | 31692 | 31755 |
| 5 | 32664 | 31576 | 31670 | 31675 | 31670 | 31522 | 31534 | 31637 | 31698 | 31765 |
| 6 | 32657 | 31600 | 31677 | 31683 | 31679 | 31522 | 31539 | 31646 | 31701 | 31769 |
| 7 | 32646 | 31622 | 31689 | 31695 | 31686 | 31523 | 31538 | 31646 | 31707 | 31775 |
| 8 | 32637 | 31638 | 31697 | 31699 | 31687 | 31521 | 31538 | 31654 | 31707 | 31778 |
| 9 | 32631 | 31663 | 31697 | 31709 | 31694 | 31521 | 31539 | 31653 | 31709 | 31788 |
| 10 | 32623 | 31683 | 31711 | 31724 | 31701 | 31529 | 31538 | 31662 | 31711 | 31788 |

FIG. 7C

| | 1 | 2 | 3 | 4 | 5 | 6 | 7 | 8 | 9 | 10 |
|---|---|---|---|---|---|---|---|---|---|---|
| 1 | 1.004986 | 1.004487 | 1.004398 | 1.003863 | 1.003932 | 1.004216 | 1.004578 | 1.004916 | 1.004709 | 1.004126 |

FIG. 7D

| | 1 | 2 | 3 | 4 | 5 | 6 | 7 | 8 | 9 | 10 |
|---|---|---|---|---|---|---|---|---|---|---|
| 1 | 1.0032 | 1.0062 | 1.0055 | 1.0053 | 1.0049 | 1.0049 | 1.0051 | 1.0051 | 1.005 | 1.0049 |
| 2 | 1.0026 | 1.0052 | 1.0053 | 1.0052 | 1.0049 | 1.0049 | 1.005 | 1.005 | 1.0049 | 1.0049 |
| 3 | 1.0028 | 1.0048 | 1.0051 | 1.0051 | 1.0048 | 1.0049 | 1.005 | 1.0048 | 1.005 | 1.0048 |
| 4 | 1.0029 | 1.0046 | 1.0051 | 1.0048 | 1.0046 | 1.0047 | 1.005 | 1.0045 | 1.005 | 1.0045 |
| 5 | 1.0031 | 1.0045 | 1.0052 | 1.0047 | 1.0046 | 1.0046 | 1.0048 | 1.0045 | 1.0049 | 1.0047 |
| 6 | 1.0032 | 1.0046 | 1.0051 | 1.0048 | 1.0047 | 1.0045 | 1.0048 | 1.0045 | 1.0049 | 1.0048 |
| 7 | 1.0032 | 1.0046 | 1.0051 | 1.0047 | 1.0047 | 1.0044 | 1.0047 | 1.0043 | 1.0049 | 1.0048 |
| 8 | 1.0033 | 1.0044 | 1.0053 | 1.0046 | 1.0046 | 1.0042 | 1.0045 | 1.0044 | 1.0048 | 1.0048 |
| 9 | 1.0035 | 1.0045 | 1.0048 | 1.0046 | 1.0046 | 1.0041 | 1.0044 | 1.0042 | 1.0047 | 1.0048 |
| 10 | 1.0036 | 1.0045 | 1.005 | 1.0047 | 1.0045 | 1.0042 | 1.0042 | 1.0043 | 1.0046 | 1.0047 |

# FIG. 8A

| | 1 | 2 | 3 | 4 | 5 | 6 | 7 | 8 | 9 | 10 |
|---|---|---|---|---|---|---|---|---|---|---|
| 1 | 32565 | 31629 | 31559 | 31528 | 31520 | 31368 | 31374 | 31474 | 31530 | 31596 |
| 2 | 32597 | 31417 | 31508 | 31505 | 31509 | 31371 | 31380 | 31475 | 31531 | 31592 |
| 3 | 32586 | 31407 | 31501 | 31509 | 31511 | 31374 | 31382 | 31483 | 31533 | 31599 |
| 4 | 32574 | 31418 | 31500 | 31516 | 31517 | 31378 | 31379 | 31493 | 31535 | 31612 |
| 5 | 32564 | 31435 | 31505 | 31525 | 31523 | 31378 | 31383 | 31495 | 31543 | 31615 |
| 6 | 32554 | 31455 | 31514 | 31532 | 31529 | 31381 | 31389 | 31503 | 31547 | 31618 |
| 7 | 32541 | 31476 | 31526 | 31545 | 31537 | 31384 | 31390 | 31510 | 31551 | 31623 |
| 8 | 32528 | 31499 | 31530 | 31554 | 31542 | 31389 | 31395 | 31515 | 31555 | 31626 |
| 9 | 32516 | 31521 | 31544 | 31564 | 31549 | 31391 | 31400 | 31520 | 31560 | 31634 |
| 10 | 32505 | 31539 | 31552 | 31575 | 31559 | 31396 | 31404 | 31527 | 31566 | 31638 |

# FIG. 8B

| | 1 | 2 | 3 | 4 | 5 | 6 | 7 | 8 | 9 | 10 |
|---|---|---|---|---|---|---|---|---|---|---|
| 1 | 32694 | 31792 | 31717 | 31670 | 31659 | 31490 | 31499 | 31608 | 31675 | 31751 |
| 2 | 32727 | 31579 | 31666 | 31647 | 31648 | 31493 | 31505 | 31609 | 31676 | 31747 |
| 3 | 32715 | 31569 | 31659 | 31651 | 31650 | 31496 | 31507 | 31617 | 31678 | 31754 |
| 4 | 32703 | 31580 | 31658 | 31658 | 31656 | 31500 | 31504 | 31627 | 31680 | 31767 |
| 5 | 32693 | 31597 | 31663 | 31667 | 31662 | 31500 | 31508 | 31629 | 31688 | 31770 |
| 6 | 32683 | 31617 | 31672 | 31674 | 31668 | 31503 | 31514 | 31637 | 31692 | 31773 |
| 7 | 32670 | 31639 | 31684 | 31687 | 31676 | 31506 | 31515 | 31644 | 31696 | 31778 |
| 8 | 32657 | 31662 | 31688 | 31696 | 31681 | 31511 | 31520 | 31649 | 31700 | 31781 |
| 9 | 32645 | 31684 | 31702 | 31707 | 31688 | 31513 | 31525 | 31654 | 31705 | 31790 |
| 10 | 32634 | 31702 | 31710 | 31718 | 31698 | 31518 | 31529 | 31661 | 31711 | 31794 |

FIG. 8C

| | 1 | 2 | 3 | 4 | 5 | 6 | 7 | 8 | 9 | 10 |
|---|---|---|---|---|---|---|---|---|---|---|
| 1 | 32668 | 31826 | 31732 | 31696 | 31674 | 31520 | 31535 | 31634 | 31688 | 31752 |
| 2 | 32682 | 31579 | 31674 | 31668 | 31663 | 31524 | 31537 | 31633 | 31685 | 31748 |
| 3 | 32678 | 31559 | 31663 | 31668 | 31662 | 31528 | 31538 | 31635 | 31691 | 31752 |
| 4 | 32670 | 31562 | 31659 | 31666 | 31661 | 31525 | 31535 | 31634 | 31691 | 31754 |
| 5 | 32664 | 31575 | 31669 | 31674 | 31669 | 31521 | 31533 | 31636 | 31697 | 31764 |
| 6 | 32657 | 31599 | 31676 | 31682 | 31678 | 31521 | 31538 | 31645 | 31700 | 31768 |
| 7 | 32646 | 31621 | 31688 | 31694 | 31685 | 31522 | 31537 | 31645 | 31706 | 31774 |
| 8 | 32637 | 31637 | 31696 | 31698 | 31686 | 31520 | 31537 | 31653 | 31706 | 31777 |
| 9 | 32631 | 31662 | 31696 | 31708 | 31693 | 31520 | 31538 | 31652 | 31708 | 31787 |
| 10 | 32623 | 31682 | 31710 | 31723 | 31700 | 31528 | 31537 | 31661 | 31710 | 31787 |

# FIG. 9

Generate baseline offset information using first default baseline at normal frequency and second default baseline at hopping frequency
S900
Store baseline offset information in baseline offset information storage unit
S910
Generate first baseline for generating touch sensing data at normal frequency
S920
Read baseline offset information for each hopping frequency from baseline offset information storage unit
S930
Generate second baseline for each hopping frequency using first baseline and baseline offset information for each hopping frequency
S940
Generate touch sensing data by comparing touch raw data obtained at normal frequency with first baseline or comparing touch raw data obtained at hopping frequency with second baseline
S950
Transmit touch sensing data to host system
S960

## INTERNATIONAL SEARCH REPORT

International application No. **PCT/KR2024/017149**

**A. CLASSIFICATION OF SUBJECT MATTER**

**G06F 3/041**(2006.01)i; **G06F 3/044**(2006.01)i

According to International Patent Classification (IPC) or to both national classification and IPC

**B. FIELDS SEARCHED**

Minimum documentation searched (classification system followed by classification symbols)

G06F 3/041(2006.01); G06F 3/0354(2013.01); G06F 3/044(2006.01); G06N 20/00(2019.01); G09G 3/20(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 터치 센싱(touch sensing), 노멀 주파수(normal frequency), 베이스라인(baseline), 오프셋(offset), 호핑 주파수(hopping frequency)

**C. DOCUMENTS CONSIDERED TO BE RELEVANT**

| Category* | Citation of document, with indication, where appropriate, of the relevant passages | Relevant to claim No. |
|---|---|---|
| A | KR 10-2186177 B1 (ACONIC INC.) 03 December 2020 (2020-12-03) See paragraphs [0009], [0017] and [0087]; and figure 1. | 1-15 |
| A | KR 10-2021-0012891 A (SAMSUNG ELECTRONICS CO., LTD.) 03 February 2021 (2021-02-03) See paragraphs [0018] and [0043]. | 1-15 |
| A | KR 10-2014-0010714 A (LG ELECTRONICS INC.) 27 January 2014 (2014-01-27) See paragraphs [0032]-[0034]. | 1-15 |
| A | KR 10-2021-0127665 A (LG DISPLAY CO., LTD.) 22 October 2021 (2021-10-22) See paragraphs [0035] and [0119]. | 1-15 |
| A | US 2013-0194229 A1 (SYNAPTICS INCORPORATED) 01 August 2013 (2013-08-01) See paragraphs [0059] and [0082]; and figure 2. | 1-15 |

☐ Further documents are listed in the continuation of Box C. ☑ See patent family annex.

* Special categories of cited documents:

- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **17 February 2025** | **17 February 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/017149**

| Patent document cited in search report | Publication date (day/month/year) | Patent family member(s) | Publication date (day/month/year) |
|---|---|---|---|
| KR 10-2186177 B1 | 03 December 2020 | WO 2021-172730 A1 | 02 September 2021 |
| KR 10-2021-0012891 A | 03 February 2021 | US 11068116 B2 | 20 July 2021 |
| | | US 2021-0026472 A1 | 28 January 2021 |
| | | WO 2021-015401 A1 | 28 January 2021 |
| KR 10-2014-0010714 A | 27 January 2014 | KR 10-1996084 B1 | 03 July 2019 |
| KR 10-2021-0127665 A | 22 October 2021 | CN 107977112 A | 01 May 2018 |
| | | CN 107977112 B | 16 July 2021 |
| | | CN 113377235 A | 10 September 2021 |
| | | CN 113377235 B | 02 February 2024 |
| | | EP 3316102 A1 | 02 May 2018 |
| | | EP 3316102 B1 | 06 April 2022 |
| | | EP 4024181 A1 | 06 July 2022 |
| | | KR 10-2018-0046338 A | 08 May 2018 |
| | | KR 10-2314497 B1 | 20 October 2021 |
| | | KR 10-2380214 B1 | 30 March 2022 |
| | | US 10474286 B2 | 12 November 2019 |
| | | US 10963107 B2 | 30 March 2021 |
| | | US 11513641 B2 | 29 November 2022 |
| | | US 2018-0113559 A1 | 26 April 2018 |
| | | US 2020-0033990 A1 | 30 January 2020 |
| | | US 2021-0181893 A1 | 17 June 2021 |
| US 2013-0194229 A1 | 01 August 2013 | US 8970547 B2 | 03 March 2015 |